# EUROPÄISCHE PATENTSCHRIFT

(11) **EP 2 584 333 B1**
(45) Veröffentlichungstag und Bekanntmachung des Hinweises auf die Patenterteilung: **04.03.2015**
(21) Anmeldenummer: 12178517.4
(22) Anmeldetag: 30.07.2012
(51) Int. Cl.: G01L 25/00, G01B 3/46, A01K 75/00, G01B 21/16, G01L 5/00

(54) **Einrichtung und Verfahren zur Prüfung der Messgenauigkeit von Messgeräten und Verwendung einer solchen Prüfeinrichtung zur Prüfung der Messgenauigkeit von Maschenmessgeräten**
Device and method for testing the precision of measuring devices and use of such a testing device for testing the precision of mesh measuring devices
Dispositif et procédé destinés à contrôler la précision de mesure d'appareils de mesure et utilisation d'un tel dispositif de contrôle destiné à contrôler la précision de mesure d'appareils de mesure de mailles

(30) Priorität: 19.10.2011 DE 202011051682 U
(43) Veröffentlichungstag der Anmeldung: 24.04.2013
(73) Patentinhaber: W. Ludolph GmbH & Co. KG, 27572 Bremerhaven (DE)
(72) Erfinder: Conradt, Carsten, 27580 Bremerhaven (DE)
(74) Vertreter: Wasiljeff, Johannes M.B.

(56) Entgegenhaltungen:
- CN-U- 201 945 274
- DD-A1- 142 089
- DE-C1- 3 811 202
- DE-C2- 10 029 742

## Beschreibung

Die Erfindung betrifft eine Einrichtung zur Prüfung der Messgenauigkeit von Messgeräten zum Messen der Dimension eines Körpers und der dabei auf Messzungen des Messgeräts wirkenden Messkraft gemäß dem Oberbegriff des Anspruchs 1. Die Erfindung betrifft außerdem ein Verfahren zur Prüfung der Messgenauigkeit von Messgeräten zum Messen der Dimension eines Körpers und der dabei auf Messzungen des Messgeräts wirkenden Messkraft gemäß dem Oberbegriff des Anspruchs 11. Die Erfindung betrifft ferner die Verwendung einer solchen Prüfeinrichtung oder eines solchen Verfahrens zur Prüfung der Messgenauigkeit von Maschenmessgeräten zum Messen der Maschenöffnung netzförmiger Gewebe, insbesondere Fischernetzen, gemäß Anspruch 15.

Netze sind Gewebe, bei denen Fadenreihen mit Fadenfolgen verknotet sind und dabei die Knoten dadurch unverschieblich sind, dass sie sich durch Zug in jeder der Fadenrichtungen fester schließen. Die Fadenabschnitte zwischen den Knoten werden dabei auch als "Maschenweite" bezeichnet, während die "Maschenöffnung" durch den Abstand der in einer Masche gegenüberliegend angeordneten Knoten bestimmt ist.

Es gibt viele Anwendungsfälle, bei denen die Dimension bzw. die Maßhaltigkeit eines Körpers, insbesondere eines elastischen Körpers oder Gebildes, mit bestimmten Messkräften zu messen ist, um repräsentative Vergleichsmessungen zu erhalten. Ein Beispiel für die Messung der Dimension mit einer bestimmten Messkraft ist die Erfassung der Maschenöffnung von Netzen. Dabei werden entsprechende Maschenmessgeräte eingesetzt.

Ein Fischernetz ist dabei ein solches netzförmiges Gewebe, welches zum Fischfang benutzt wird. Die Maschenöffnung ist dabei auf den zu fangenden Fisch abgestimmt. Aufgrund des fischereipolitischen Ziels der Erhaltung der Fischereiressourcen durch technische Maßnahmen zum Schutz von jungen Meerestieren bestehen gemeinschaftsrechtliche Vorgaben und internationale Abkommen zur Bestimmung von Mindestmaschenöffnungen, so dass weniger Jungfische gefangen werden.

Die Einhaltung der Vorschriften über Mindestmaschenöffnungen werden von Fischerei-Kontrollbeamten überwacht. Zeitweise sahen gesetzliche Vorschriften zur Durchführung der Kontrolle der Maschenöffnungen Messgeräte zur Feststellung der Maschenöffnungen vor, welche aus 2 mm dicken Platten aus dauerhaftem und formbeständigem Material bestehen. Diese bekannten, als Messspaten bezeichneten, Messgeräte weisen entweder abwechselnd parallele und schräge Kanten mit einer Verjüngung an jeder Seite oder nur schräge Kanten mit einer Verjüngung an jeder Seite auf. Entlang der schrägen Kanten ist jeweils die Breite angegeben und auf der Oberfläche des Messspatens eingeprägt. Der Kontrollbeamte misst die Maschenöffnung, indem er den Messspaten von Hand in die Masche einführt. Sollte der Schiffskapitän die festgestellte Maschenöffnung anfechten, so war vorgesehen, eine neue Messung mit einem am Messgerät befestigten geeichten Gewicht oder einem Kraftmesser vorzunehmen, so dass der Messpaten mit einer definierten Kraft die Masche streckt.

Nachdem die Verwendung der Messspaten durch die Fischerei-Kontrollbeamten in einigen Fällen Anlass zu Meinungsverschiedenheiten zwischen Kontrollbeamten und Fischern über die Messmethoden und die Ergebnisse der Messung der Maschen gab, je nachdem wie die Geräte verwendet wurden, wurde zur Messung der Maschenöffnung ein Maschenmessgerät mit zwei Zungen zum Messen der Maschen eingeführt. Das Maschenmessgerät übt auf die Maschen automatisch eine Beanspruchung mit einer bestimmten Messkraft aus. Bei der Messung der Maschenöffnung werden die Zungen des Maschenmessgeräts in die einzelne Masche eingeführt und die bewegliche Zunge ausgefahren. Die Maschenöffnung wird dabei als der Abstand zwischen den Außenkanten der Zungen des Maschenmessgeräts zu dem Messzeitpunkt gemessen, wo das Maschenmessgerät den vorgegebenen Zielwert für die Messkraft erreicht. Dieser Zielwert der Messkraft, bei dessen Erreichen das Messgerät die Maschenöffnungen messen soll, wird an dem Maschenmessgerät eingestellt. Um repräsentative und vergleichbare Messwerte zu erhalten, sind die Messungen der Maschenöffnungen mit normierten Messkräften durchzuführen. Dabei sind insbesondere bei aktivem Fanggerät abgegrenzte Bereiche von Maschenöffnungen mit unterschiedlichen Messkräften für diese Bereiche vorgesehen.

Ein bekanntes Maschenmessgerät mit zwei Zungen zum Messen der Maschen ist das von der Anmelderin mit der Bezeichnung "Delta Mesh Gauge" angebotene Maschenmessgerät.

Das bekannte Maschenmessgerät misst dabei zum einen die Maschenöffnung und zum anderen auch die dabei aufgebrachte Messkraft. Zur Erfassung der Messkraft ist der festen Zunge eine Kraftmesseinrichtung, nämlich ein Dehnungsmessstreifen, zugeordnet. Durch die Messung der Kraft soll gewährleistet werden, dass die Maschenöffnung bei einer bestimmten Messkraft gemessen wird.

Zur Vermeidung von Meinungsverschiedenheiten über die Ergebnisse der Messung und die Verwendung des Geräts ist es erforderlich, dass das Maschenmessgerät möglichst genau arbeitet. Die Genauigkeit des Maschenmessgeräts wurde bisher dadurch geprüft, dass die Zungen des Messgeräts in Schlitze einer geeichten Prüfmessplatte geschoben werden, wodurch die Genauigkeit des Messwerts der ausgefahrenen Länge der Zungen überprüft werden kann. Zur Prüfung der Messkraft ist vorgesehen, geeichte Prüfgewichte an die feste Zunge zu hängen, so dass die Kraftmesseinrichtung des Maschenmessgeräts mit einer geeichten Gewichtskraft belastet wird.

Bestehen jedoch beispielsweise im Rahmen einer Inspektion durch Kontrollbeamte Meinungsverschiedenheiten aufgrund von Zweifeln an der Zuverlässigkeit des verwendeten Geräts, so können - insbesondere bei Anwendungen auf hoher See - mit den herkömmlichen Geräten zur Prüfung der Genauigkeit des Maschenmessgeräts keine zuverlässigen Überprüfungen erreicht werden. Auch besteht sowohl auf hoher See als auch an Land das Bedürfnis, rasch und mit geringem Aufwand die Genauigkeit von Maschenmessgeräten regelmäßig zu überprüfen, um im Bedarfsfall ein genaues Maschenmessgerät zur Verfügung zu haben.

Die Mitführung und Verwendung der geeichten Prüfmessplatte und der geeichten Prüfgewichte zur Aufhängung an die feste Zunge ist dabei sehr aufwendig. Zudem dürfen die Gewichte nur unter stabilen Bedingungen verwendet werden, so dass eine Prüfung der Genauigkeit der Maschenmessgeräte auf einem schwankenden Schiff oft nicht möglich ist.

Der vorliegenden Erfindung liegt nach alledem das Problem zugrunde, eine genaue Messung der Dimension eines Körpers und der dabei wirkenden Messkraft, insbesondere eine genaue Messung der Maschenöffnung von Netzen unter Verwendung von Maschenmessgeräten mit einfachen Mitteln zu gewährleisten.

DE 100 29 742 A1 offenbart eine Kraftmessvorrichtung mittels Erfassung geringfügiger Dimensionsänderungen.

Dieses Problem wird erfindungsgemäß durch eine Einrichtung zur Prüfung der Messgenauigkeit von Messgeräten mit den Merkmalen des Anspruchs 1 gelöst. Außerdem wird das Problem durch ein Verfahren zur Prüfung der Messgenauigkeit von Messgeräten mit den Merkmalen des Anspruchs 11 gelöst. Das Problem wird ferner gemäß Anspruch 15 durch die Verwendung einer solchen Prüfeinrichtung oder eines solchen Verfahrens zur Prüfung der Messgenauigkeit von Maschenmessgeräten gelöst.

Die erfindungsgemäße Prüfeinrichtung für Messgeräte weist eine Messzungenaufnahme auf, in welche die Messzungen eines Messgeräts einführbar sind und in der ein Kraftmessfühler und wenigstens ein Messzungenfühler voneinander in einem bestimmten Messabstand in Längsrichtung der Messzungenaufnahme beabstandet angeordnet sind. Das Messgerät dient dabei zum Messen der Dimension eines Körpers oder Gebildes, wobei das Messgerät bewegliche Messzungen aufweist, mit denen Außen- oder Innenabmessungen des Körpers oder Gebildes erfasst werden. Das Messen der Dimension eines Körpers oder Gebildes wird nachfolgend als Längenmessung bezeichnet. Beispielsweise wird mit einem Maschenmessgerät die Maschenöffnung eines Netzes, also eine Länge der Öffnung einer Masche, gemessen.

Die Messzungenaufnahme kann dabei als Schlitz in einem kompakten Gehäuse der Prüfeinrichtung ausgebildet sein, wobei sich die bewegbare Messzunge des Messgeräts in der Messzungenaufnahme frei bewegen kann, bis die zunehmende Öffnung der Messzungen den Bereich des Messabstands erreicht, welcher durch die Fühler in der Messzungenaufnahme begrenzt ist. Der Kraftmessfühler erfasst die in der Messzungenaufnahme auf den Kraftmessfühler wirkende Realkraft, so dass ein Vergleichswert für die vom Messgerät ermittelte Messkraft zur Verfügung steht. Sowohl das Messgerät als auch die Prüfeinrichtung ermitteln die auf die Messzungen wirkende Kraft, wobei im Folgenden unter dem Begriff "Messkraft" der vom Messgerät erfasste Wert und unter "Realkraft" der von der Prüfeinrichtung erfasste Wert verstanden wird. Auf diese Weise ist mit einem kompakten Prüfgerät jederzeit und unter allen Bedingungen eine Prüfung der Messgenauigkeit von Messgeräten zum Messen von Körperdimensionen bzw. Abmessungen und der dabei auf Messzungen des Messgeräts wirkenden Messkraft möglich, bspw. eine Prüfung von Maschenmessgeräten.

Die von der Prüfeinrichtung ermittelte Realkraft kann von der tatsächlich auf den Kraftmessfühler wirkenden Kraft abweichen. Vorteilhaft wird daher die Prüfeinrichtung regelmäßig kalibriert, justiert oder geeicht, damit die von der Prüfeinrichtung ermittelte Realkraft möglichst der tatsächlich wirkenden Kraft entspricht. Unter einer Kalibrierung wird dabei die Feststellung und Dokumentation einer Abweichung der ermittelten Realkraft von der tatsächlich auf den Kraftmessfühler wirkenden Kraft verstanden, wobei die ermittelte Abweichung bei der anschließenden Benutzung der Prüfeinrichtung zur Korrektur der abgelesenen Werte berücksichtigt wird. Bei einer Justierung der Prüfeinrichtung wird mit entsprechenden Eingriffen, bspw. mechanischen Eingriffen, in die Prüfeinrichtung die ermittelte Realkraft mit der tatsächlich auf den Kraftmessfühler wirkenden Kraft abgeglichen. Bei einer Eichung wird eine Kalibrierung unter hoheitlicher Aufsicht durchgeführt.

In einer vorteilhaften Ausführungsform der Erfindung umfasst der Kraftmessfühler einen Dehnungsmessstreifen, welcher an eine Auswertungseinheit angeschlossen ist. Die Auswertungseinheit weist Mittel zur Bestimmung der in Längsrichtung der Messzungenaufnahme wirkenden Realkraft aus den Messergebnissen des Dehnungsmessstreifens auf. Der Dehnungsmessstreifen liefert elektrische Signale mit Informationen über die Materialdehnung, die von der Messzunge eines Messgeräts auf den Träger des Dehnungsmessstreifens ausgeübt wird. Aus diesem Signal können genaue Rückschlüsse auf die von der Messzunge aufgebrachte Kraft gezogen werden.

Bevorzugt sind mehrere Messzungenfühler vorgesehen, welche in unterschiedlichen Messabständen bezogen auf den Kraftmessfühler angeordnet sind. Auf diese Weise realisiert die erfindungsgemäße Prüfeinrichtung in kompakter Bauweise mehrere, unterschiedlich lange Messabstände zwischen dem Kraftmessfühler und dem entsprechenden Messzungenfühler, wobei sich die Bereiche der Messzungenaufnahme für verschiedene Messabstände abschnittsweise überdecken. Die erfindungsgemäße Prüfeinrichtung ist daher bei sehr kompakter Bauweise in der Lage, zu jedem an einem Messgerät einstellbaren Zielwert für die Messkraft in einem für diesen Zielwert vorgesehenen Bereich für die Längenmessung Kraft und Längenmessungen durchzuführen. Dabei können in einer vorteilhaften Ausführungsform der Erfindung durch entsprechend angeordnete Messzungenfühler Messabstände fest eingestellt werden, wobei jedem Messabstand und dem entsprechenden Messzungenfühler eine für diesen Messabstand vorgesehene Messkraft zugeordnet werden kann.

Bevorzugt ist jeder Messzungenfühler in Längsrichtung der Messzungenaufnahme gegen eine Rückstellkraft beweglich angeordnet. Dadurch wird ein plötzlicher Anstieg der gemessenen Realkraft vermieden und ausgeschlossen, dass die Messeinrichtung im Messgerät durch elastische Verformung der Antriebsbauteile im Messgerät aufgrund des Motordrehmoments beeinträchtigt wird. Die Rückstellkraft simuliert dabei zudem ein elastisches Verhalten eines von dem Messgerät idealerweise zu vermessenden Objekts, bspw. den Maschen eines Fischernetzes.

Vorteilhaft sind Mittel zur Einstellung der Rückstellkraft vorgesehen. Die Rückstellkraft kann dabei durch Federkraft oder auch hydraulisch oder pneumatisch aufgebracht werden. In bevorzugter Ausgestaltung der Erfindung ist die Rückstellkraft jedes Messzungenfühlers auf eine für den jeweiligen Messabstand vorgesehene Messkraft des Messgerätes abgestimmt.

In einer bevorzugten Ausführungsform der Erfindung ist jedem Messzungenfühler ein fester Anschlag zugeordnet, an dem der jeweilige Messzungenfühler bei Überwindung der Rückstellkraft anlegbar ist. Auf diese Weise ist bei einer Ausführung mit einer der Messkraft entsprechenden Rückstellkraft sichergestellt, dass die Rückstellfeder die Messzungen in der Messzungenaufnahme hält und darüber hinaus die Messzungen nach Überwindung der Rückstellkraft in dem genau bekannten Messabstand liegen. Der Messabstand, d.h. der Abstand des Kraftmessfühlers von dem jeweiligen Messzungenfühler, ist nämlich geometrisch in der Prüfeinrichtung festgelegt und daher genau bekannt. Die Rückstellkraft kann dabei in einer vorteilhaften Ausgestaltung der Erfindung geringfügig kleiner sein als die vorgesehene Messkraft, so dass sichergestellt ist, dass die Messzungenfühler bei Annäherung an den am Messgerät eingestellten Zielwert der Messkraft die Rückstellkraft überwinden.

Die Größe des Messabstands ist bei Anliegen des Messzungenfühlers am Anschlag nicht durch den Federweg für die Rückstellkraft beeinträchtigt, wenn die Rückstellkraft geringfügig kleiner ist als der Zielwert der Messkraft. Das erfindungsgemäße Prüfgerät ermöglicht daher auch eine Prüfung der Messgenauigkeit des Messgeräts bezüglich der Öffnung der Messzungen, d.h. des Ausgabewerts für die Längenmessung, indem die Messzungen gezielt bis zum Anschlag geöffnet werden und der Messwert der Maschenöffnung am Messgerät mit dem bekannten Wert des Messabstands verglichen wird. Die Prüfung der Genauigkeit der Kraftmessung kann daher zugleich mit der Prüfung der Genauigkeit der Längenmessung erfolgen.

Vorteilhaft umfasst jeder Messzungenfühler eine Torsionsfeder, deren freies Federende in die Messfühleraufnahme reicht und gegen die Rückstellkraft der Torsionsfeder in Längsrichtung der Messzungenaufnahme bewegbar ist. Mit einem einfachen und kostengünstigen Federbauteil kann damit eine Rückstellkraft in der erforderlichen Größenordnung bereitgestellt werden. Vorteilhaft ist die Torsionsfeder auf einem ortsfest angeordneten Federdorn aufgesteckt, welcher in einem Gehäuse der Prüfeinrichtung befestigt ist, beispielsweise an einem Gehäuseboden. Die Torsionsfeder ist dabei ein Federdraht der in übereinanderliegenden Lagen aufgewickelt ist, so dass ein im Wesentlichen zylindrischer Innenraum umschlossen ist. In den Innenraum ist der Federdorn einführbar.

Dabei sind für unterschiedliche Messabstände entsprechend angeordnete Federdorne vorgesehen, auf denen jeweils eine Torsionsfeder aufgesteckt wird. Jede Torsionsfeder reicht mit einem freien Federende in die Messfühleraufnahme und ist mit dem anderen Federende an einem Widerlager gehalten, welches beispielsweise an dem Gehäuse der Prüfeinrichtung ausgebildet ist.

Die erfindungsgemäße Prüfeinrichtung erlaubt daher eine variabel einstellbare Längenmessung und zwar zum einen durch die Anordnung von festen Anschlägen für jeden Messzungenfühler, beispielsweise durch Anschlagstifte. Daneben ist auch eine Ergänzung der Messzungenfühler durch zusätzliche Bauteile möglich, um Einfluss auf den Messabstand zu nehmen.

Die Auswertungseinheit für den Dehnungsmessstreifen ist vorteilhaft an einen Bildschirm zur Anzeige der aktuellen Messkraft angeschlossen, so dass eine direkt in einem Display ablesbare Kraftanzeige gegeben ist. Die Kraftanzeige im Display kann als momentaner Istwert, als Balkendiagramm, als Diagramm mit Kraftaufbau oder aber als bereits ausgewertete Wertetabelle, beispielsweise mit allen Werten einer Messreihe, dargestellt werden.

In einer vorteilhaften Ausführungsform der Erfindung ist der Auswertungseinrichtung eine Speichereinheit zugeordnet, in der ermittelte Wertepaare des Messabstands und der Realkraft für bestimmte Messgeräte abspeicherbar sind. Auf diese Weise kann jederzeit auf frühere Prüfvorgänge bei einem bestimmten Gerät zurückgegriffen werden. Vorteilhaft umfasst dabei die Auswertungseinheit auch eine Schnittstelle für Kommunikationen mit externen Geräten, so dass beispielsweise eine Datenübertragung auf externe Computer zur weiteren Verarbeitung des Datenmaterials möglich ist. Ferner ist ein Datenabgleich und Übermittlung auf das jeweilige Messgerät möglich, beispielsweise per Funk (WLAN, Bluetooth usw.), per Kabel oder Infrarotübertragung.

Vorteilhaft umfasst die erfindungsgemäße Prüfeinrichtung eine Energieversorgung, welche auf eine Batterie oder einen Akku zurückgreift. Im Akkubetrieb kann die wiederaufladbare Batterie beispielsweise über das Stromnetz, über USB-Schnittstellen oder über Solarzellen geladen werden. Gleichfalls ist ein Netzbetrieb möglich.

Die erfindungsgemäße Prüfeinrichtung ist selbst auf einfache Weise durch Verwendung geeichter Geräte, kalibrierbar, justierbar und eichfähig.

Die Prüfeinrichtung ist ein kompaktes Gerät, das leicht in einem Koffer transportierbar ist. Die Prüfeinrichtung kann aber auch in einer weiteren Ausführungsform stationär betrieben werden.

Über seine Schnittstelle kann die erfindungsgemäße Prüfeinrichtung zur Speicherung von Daten von verschiedenen Messgeräten verwendet werden. Zudem kann die Speichereinheit der Prüfeinrichtung zur Sicherung von Daten aus Messgeräten eingesetzt werden, sogenannter Datenbackup. Schließlich ist eine Verwendung der Prüfeinrichtung als Ladestation für andere Geräte vorgesehen.

Bevorzugt wird mit der von der Prüfeinrichtung ermittelten Realkraft am Kraftmessfühler das Messgerät kalibriert oder justiert. In einer weiteren vorteilhaften Ausführungsform ist eine Eichung des Messgeräts mit der ermittelten Realkraft vorgesehen.

Vorteilhaft bewegen die Messzungen den Messzungenfühler in Längsrichtung gegen eine auf die Messkraft abgestimmte Rückstellkraft, wobei die Messzungen während des Öffnungsvorgangs zunächst mit einer höheren Öffnungsgeschwindigkeit geöffnet werden und bei Erreichen des Messzungenfühlers mit einer niedrigeren Öffnungsgeschwindigkeit bewegt werden. Auf diese Weise kann der Prüfvorgang erheblich beschleunigt werden, da die Messzungen in einem Bereich, in welchem keine Kräfte auf die Messzungen wirken, mit einer hohen Geschwindigkeit rasch verfahren werden können, während die Messzungen nach Erreichen des Messzungenfühlers langsamer öffnen, bis letztlich der Zielwert der Messkraft erreicht wird. Dadurch wird eine Beeinflussung des Messergebnisses durch elastische Verformung der Antriebseinrichtungen des Messgeräts, beispielsweise der Antriebswelle eines Maschenmessgeräts, vermieden. Eine Umschaltung auf die niedrigere Öffnungsgeschwindigkeit erfolgt bei Feststellung einer Kraft zwischen den Messzungen. Die Rückstellkraft simuliert zudem elastisches Verhalten des vom Messgerät zu vermessenden Körpers, bspw. eines streckbaren Netzes.

Bei Anordnung mehrerer, in Überdeckung zueinander liegender Messabstände, d.h. auf einer Linie angeordneter Messfühler in unterschiedlichen Abständen zum Kraftmessfühler, werden die Messzungen mit der hohen Öffnungsgeschwindigkeit vor dem Einführen in das Prüfgerät geöffnet, so dass der Abstand der Messzungen beim Einführen in die Messzungenaufnahme bereits größer ist als der jeweils kleinere Messabstand. Auf diese Weise wird sichergestellt, dass nach dem Einführen der Messzungen in die Prüfeinrichtung die Messzungen nur noch an dem vorgesehen Messzungenfühler zur Anlage kommen können.

In einer vorteilhaften Ausführungsform der Erfindung wird zur Prüfung der Messgenauigkeit der Längenmessung der am Messgerät gemessene Wert der Öffnungsweite des Messgeräts mit dem Messabstand zwischen dem Kraftmessfühler und dem entsprechenden Messzungenfühler verglichen. Der Messabstand zwischen dem Kraftmessfühler und dem Messzungenfühler ist dabei geometrisch genau definiert, so dass eine Abweichung der Längenmessung des Messgeräts zur Kalibrierung, Justierung und Eichung des Messgeräts mit dem bekannten Messabstand herangezogen werden kann.

Die Prüfeinrichtung wird erfindungsgemäß zur Prüfung der Messgenauigkeit von Maschenmessgeräten zum Messen der Maschenöffnung netzförmiger Gewebe, insbesondere Fischernetzen, verwendet. Mit der erfindungsgemäßen Prüfeinrichtung kann bei Maschenmessgeräten jederzeit und mit geringem Aufwand die Genauigkeit der Längenmessung und der Messkraft geprüft werden. Sogar an Bord eines Fangschiffes kann bei der Prüfung der Maschenweite der Fangnetze unmittelbar eine Prüfung der Genauigkeit des Maschenmessgeräts erfolgen. Daher steht jederzeit ein genaues Messgerät zur Verfügung. Dadurch werden auch Meinungsverschiedenheiten zwischen Schiffskapitän und Kontrollbeamten über die Genauigkeit des zur Messung der Maschenweite verwendeten Messgeräts vorgebeugt.

Bei dieser Prüfeinrichtung für Maschenmessgeräte werden die Messabstände derart angeordnet, dass der jedem Messabstand entsprechende Abschnitt der Messzungenaufnahme einem solchen Messbereich entspricht, dem nach den einschlägigen Vorschriften, bspw. EU-Verordnung Nr. 517/2008, eine bestimmte Messkraft des Maschenmessgeräts zugeordnet ist. Die Rückstellkräfte an den Messabständen sind mit nach der Verordnung vorgesehenen Messkräften abgestimmt. Die Rückstellkräfte, d.h. bspw. die Federkraft der jeweiligen Torsionsfeder am Messabstand, können dabei geringfügig geringer sein als die vorgesehene Messkraft, so dass die Messzungen die Federkraft überwinden und an dem definierten Anschlag des Messabstands gehalten werden. Auf diese Weise kann die Genauigkeit der Längenmessung des Maschenmessgeräts auf einfache Weise geprüft werden, indem der am Messgerät angezeigte Längenmesswert mit dem Wert des Messabstands verglichen wird, welcher geometrisch durch den Abstand zwischen dem Kraftmessfühler und dem definierten Anschlag definiert ist.

Bei der Prüfung der Genauigkeit von Maschenmessgeräten simuliert die Rückstellkraft des Messzungenfühlers die Streckbarkeit eines Fischernetzes, welches unter Krafteinwirkung bei der Messung der Maschenöffnung noch geringfügig nachgibt. Bei der Verwendung der Prüfeinrichtung ist daher ein realitätsgetreuer Betrieb des Maschenmessgeräts gegeben.

Zum Prüfen der Messgenauigkeit des Messgeräts wird an dem Messgerät ein Zielwert einer Messkraft eingestellt und die Messzungen in die Messzungenaufnahme der Prüfeinrichtung eingeführt. Die Messkräfte sind dabei fest am Messgerät voreingestellt. Optional können aber auch Messkräfte frei eingestellt werden. Nachdem die Messzungen in das Prüfgerät eingeführt sind, werden die Messzungen von dem Messgerät geöffnet. Sobald die Messzungen den Kraftmessfühler und den zugeordneten Messzungenfühler erreichen, welche voneinander in einem bestimmten Messabstand in Längsrichtung der Messzungenaufnahme beabstandet angeordnet sind, wird der Öffnungsbewegung ein Widerstand entgegengesetzt, so dass das Messgerät eine Messkraft erfasst. Bei Erreichen des am Messgerät eingestellten Zielwerts der Messkraft wird die Öffnungsbewegung gestoppt. Unabhängig davon erfasst der Kraftmessfühler die auf den Kraftmessfühler wirkende Realkraft in Längsrichtung der Messzungenaufnahme, welche schließlich mit der am Messgerät erfassten Messkraft verglichen wird.

In einer weiteren vorteilhaften Ausführungsform der Erfindung wird für die Prüfung der Genauigkeit des Messgeräts bei der Längenmessung, d.h. bei Maschenmessgeräten der Messung der Maschenöffnung, ein Messabstand der Prüfeinrichtung mit einer solchen Rückstellkraft ausgewählt, die geringer ist als die am Messgerät eingestellte Messkraft. Dadurch wird sichergestellt, dass der Messzungenfühler an dem ihm zugeordneten Anschlag angelegt wird.

Weitere vorteilhafte Ausführungsformen ergeben sich aus den Unteransprüchen und den Ausführungsbeispielen, welche nachfolgend anhand der Zeichnung näher erläutert sind. Es zeigen:
- Fig. 1: einen Ausschnitt eines Fischernetzes,
- Fig. 2: eine Draufsicht auf ein Maschenmessgerät,
- Fig. 3: eine Seitenansicht des Maschenmessgeräts gemäß Fig. 2,
- Fig. 4: eine Explosionsdarstellung eines Ausführungsbeispiels einer erfindungsgemäßen Prüfeinrichtung für Maschenmessgeräte,
- Fig. 5: eine Draufsicht auf die Prüfeinrichtung gemäß Fig. 4,
- Fig. 6: eine Draufsicht auf den Innenraum der Prüfeinrichtung gemäß Fig. 4 und Fig. 5,
- Fig. 7: ein Ablaufschema eines Ausführungsbeispiels zur Prüfung der Messkraft eines Maschenmessgeräts und
- Fig. 8: ein Ablaufschema eines Ausführungsbeispiels zur Prüfung der Genauigkeit der Maschenöffnungsmessung.

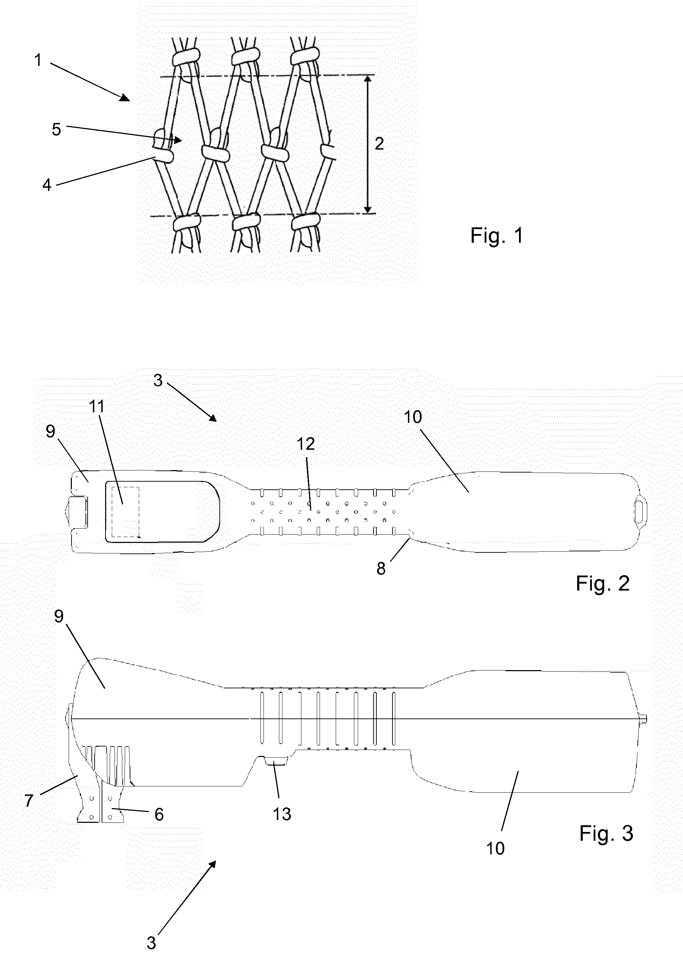

Fig. 1 zeigt einen Ausschnitt eines Fischernetzes 1, dessen Maschenöffnung 2 mit einem Maschenmessgerät 3 gemäß Fig. 2 und Fig. 3 gemessen werden kann. Das Fischernetz 1 besteht aus einer Verknotung von Fadenreihen mit Fadenfolgen, wobei vier Knoten 4 jeweils zwei Fadenreihen mit zwei Fadenfolgen zu einer Masche 5 verknüpfen. Unter dem Begriff "Maschenöffnung" wird dabei der längste Abstand zwischen zwei gegenüberliegenden Knoten 4 einer Masche verstanden, wenn die Masche 5 mit einer vorgesehenen Messkraft voll gestreckt ist. Die Maschenöffnung 2 wird dabei in einer Richtung gemessen, welche im rechten Winkel zur allgemeinen Laufrichtung des Netzgarns liegt.

Das in den Fig. 2 und 3 dargestellte Maschenmessgerät 3 übt bei der Messung der Maschenöffnung 2 von Fischernetzen 1 automatisch eine Beanspruchung der Maschen 5 mit der vorgesehenen bzw. eingestellten Messkraft aus. Hierzu umfasst das Maschenmessgerät 3 zwei Messzungen, nämlich eine feste Messzunge 6 und eine nach vorn ausschiebbare, bewegliche Messzunge 7. Die Messzungen 6, 7 sind mit einer Rundung ausgebildet, damit die Messzungen 6, 7 über das Garn des Fischernetzes 1 gleiten können.

Das Maschenmessgerät 3 weist ein hantelförmiges Gehäuse 8 auf, in dem ein System für die Messung einer auf die Messzungen 6, 7 wirkenden Kraft eingebaut ist. Der festen Messzunge 6 ist eine Kraftmesseinrichtung zugeordnet, beispielsweise eine Kraftmessdose oder ein Dehnungsmessstreifen. Im Vorderteil 9 des Gehäuses 8 ist eine nicht dargestellte Rechnereinheit untergebracht, welche die auf die feste Messzunge 6 wirksame Kraft und die aktuelle Öffnung der Messzungen 6, 7 erfasst.

Ein Vorderteil 9 des hantelförmigen Gehäuses 8 weist die Messzungen 6, 7 auf, wobei die bewegliche Messzunge 7 von einem nicht dargestellten Elektromotor im Hinterteil 10 des Gehäuses 8 über eine Welle bewegt wird. Dem Elektromotor ist ein Umdrehungszähler zugeordnet, über den die aktuelle Öffnung der Messzungen 6, 7 gemessen wird. Im Hinterteil 10 des Gehäuses 8 ist eine Batterie als Energiequelle für den Antriebsmotor untergebracht. Im Vorderteil 9 des Gehäuses 8 ist ein Bildschirm 11 angeordnet, auf dem die gemessene wirksame Kraft und andere erhebliche Daten der Messung der Maschenöffnung, beispielsweise die Weite der Masche, dem Benutzer angezeigt werden. Zwischen dem Vorderteil 9 und dem Hinterteil 10 des hantelförmigen Gehäuses 8 ist ein als Handgriff 12 ausgebildeter Mittelteil angeordnet, so dass das Maschenmessgerät 3 mit einer Hand geführt und bedient werden kann. Dabei sind sämtliche Funktionen des Maschenmessgeräts 3 über Knöpfe im Vorderteil 9 oder Bedienungsknöpfe 13 an der Unterseite des Handgriffs 12 leicht zugänglich.

Die Rechnereinheit umfasst ein Speicherelement, in dem eine Vielzahl aufeinanderfolgender Maschenmessungen abgespeichert werden können.

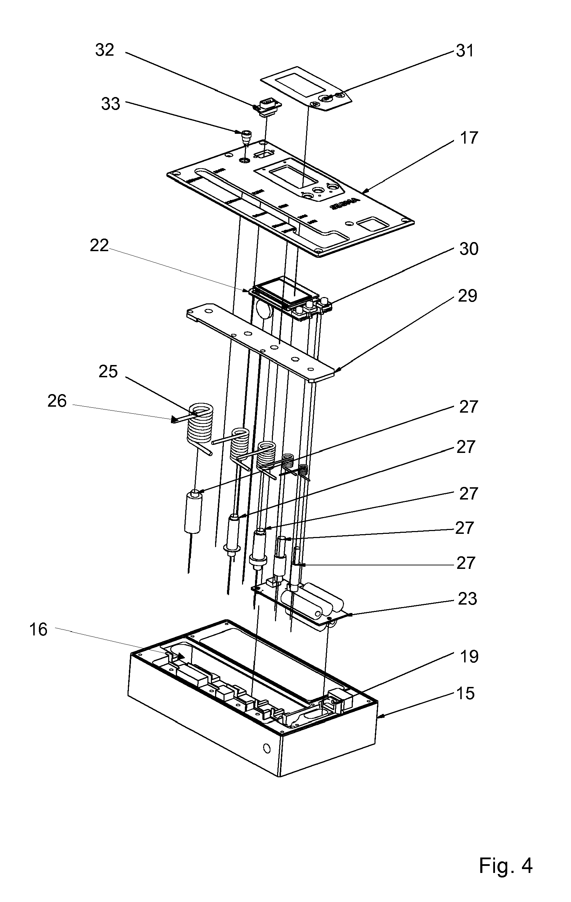

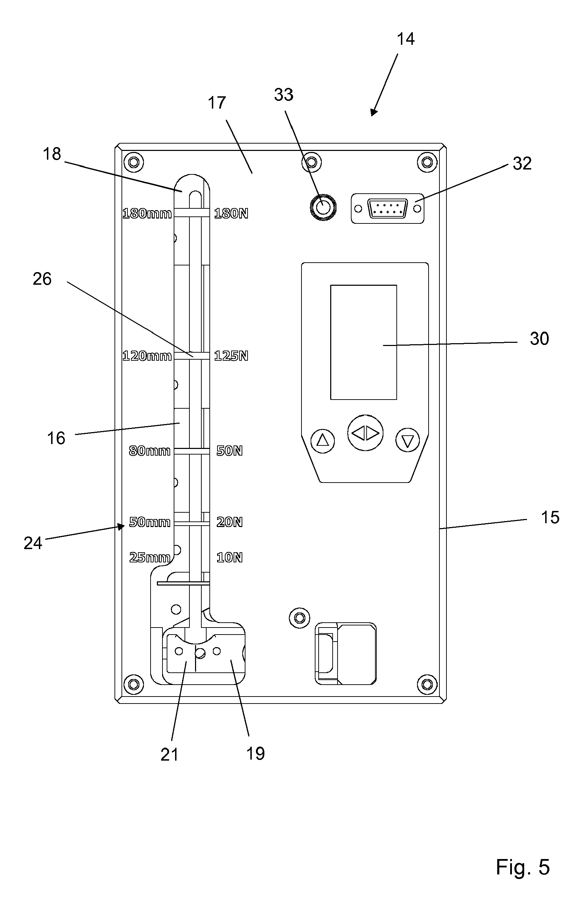

Die in Fig. 4, 5, 6 dargestellte Prüfeinrichtung 14 weist ein kastenförmiges Messgehäuse 15 auf, in dessen Innenraum eine Messzungenaufnahme 16 in Form eines geradlinigen Schlitzes ausgebildet ist. Das Messgehäuse 15 ist von einem Gehäusedeckel 17 abgeschlossen, welcher auf Höhe der Messzungenaufnahme 16 einen Durchbruch 18 aufweist, so dass die Messzungen 6, 7 des Maschenmessgeräts 3 (Fig. 2, 3) in das Messgehäuse 15 und die Messzungenaufnahme 16 einführbar sind.

An einem vorderen Ende der Messzungenaufnahme 16 ist ein Kraftmessfühler 19 angeordnet, welcher einen Dehnungsmessstreifen 20 umfasst. Der Kraftmessfühler 19 ist an einem festen Ende eingespannt und bildet mit seinem freien Ende 21 ein Ende der Messzungenaufnahme 16. An das freie Ende 21 ist eine der Messzungen 6, 7, vorzugsweise die feste Messzunge 6, anlegbar. Sobald eine Kraft auf das freie Ende 21 des Kraftmessfühlers 19 wirkt, erfasst der Dehnungsmessstreifen 20 die durch die Kraft verursachte elastische Verformung des Kraftmessfühlers 19 und leitet ein entsprechendes Signal an eine Auswertungseinheit 22 weiter. Die Auswertungseinheit 22 ist eine elektronische Rechnereinheit, welche Mittel zur Bestimmung der in Längsrichtung der Messzungenaufnahme 16 wirkenden Realkraft aus dem Messergebnissen des Dehnungsmessstreifens 20 aufweist. Zur Energieversorgung der Auswertungseinheit 22 ist ein Akkupaket 23 vorgesehen.

In der Messzungenaufnahme 16 sind in bestimmten Messabständen 24 Torsionsfedern 25 angeordnet, deren freie Federenden jeweils in die Messzungenaufnahme 16 reichen. Die Torsionsfedern bilden dadurch Messzungenfühler 26 aus, mit denen die Messzungen eines Maschenmessgeräts 3 zusammen wirken. Die Torsionsfedern 25 sind jeweils an dem Messgehäuse 15 in Drehrichtung gesichert, so dass jeder Messzungenfühler 26 in Längsrichtung der Messzungenaufnahme 16 gegen die Rückstellkraft der jeweiligen Torsionsfeder 25 beweglich ist.

Die Torsionsfedern 25 sind jeweils auf einen am Messgehäuse 15 festgelegten Federdorn 27 aufgesteckt und können bei Bedarf durch eine Torsionsfeder mit anderen Federkennwerten, bspw. einer anderen Federkraft oder einer anderen Federkonstante, getauscht werden. Die Torsionsfedern 25 weisen dabei jeweils unterschiedliche Federkräfte auf, so dass jedem Messabstand 24 eine bestimmte Rückstellkraft zugewiesen ist. Die Rückstellkräfte der jeweiligen Messzungenfühler 26 sind dabei mit einer für den jeweiligen Messabstand 24 vorgesehen Messkraft des Maschenmessgeräts abgestimmt. Die Rückstellkräfte werden dabei in einem bevorzugten Ausführungsbeispiel der Erfindung so ausgewählt, dass sie geringfügig kleiner sind als die voreingestellten Messkräfte des Maschenmessgeräts 3. Jedem Messabstand 24 ist damit eine bestimmte Messkraft zugeordnet, welche geringfügig größer als die Rückstellkraft der jeweils an diesem Messabstand 24 vorgesehenen Torsionsfeder 25 ist.

Jedem Messzungenfühler 26 ist ein fester Anschlag 28 zugeordnet, welcher an dem Messgehäuse 15 auf axialer Höhe des vorgesehenen Messabstands 24 ausgebildet ist. In einem alternativen Ausführungsbeispiel sind die Anschläge 28 durch Anschlagstifte gebildet. In einem weiteren Ausführungsbeispiel sind anstelle der beweglichen Messzungenfühler 26 feste Anschläge bzw. Anschlagstifte für die Messzunge des zu prüfenden Maschenmessgerätes 3 vorgesehen. An dem festen Anschlag 28 ist der jeweilige Messzungenfühler 26 bei Überwindung der Rückstellkraft der Torsionsfeder 25 bei Anliegen einer entsprechend hohen Messkraft durch die Messzunge des Maschenmessgeräts anlegbar.

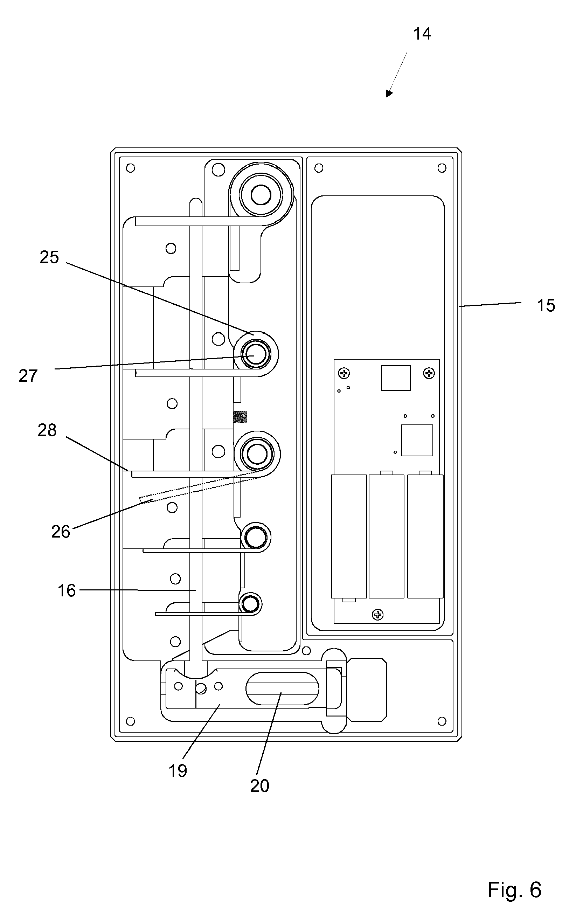

Wie in Fig. 6 anhand eines gestrichelt dargestellten Messzungenfühlers 26 dargestellt ist, ragt der Messzungenfühler 26 in der Ruheposition der Torsionsfeder 25 in den freien Raum der Messzungenaufnahme 16 vor dem Anschlag 28. Der Messzungenfühler 26 ist somit beweglich und wird von der Messzunge während des Prüfvorgangs gegen die Rückstellkraft der Torsionsfeder 25 in Richtung des festen Anschlags 28 bewegt. Die Torsionsfeder 25 simuliert somit das Streckverhalten eines Fischernetzes während der Messung der Maschenöffnung 2.

Die Federdorne 27 und die auf die Federdorne 27 aufgesteckten Torsionsfedern 25 werden von einem Sicherungsblech 29 axial in dem Messgehäuse 15 fixiert.

An die Auswertungseinheit 22 ist ein Bildschirm 30 zur Anzeige der aktuellen Messkraft angeschlossen. Die Auswertungseinheit 22 mit dem Bildschirm 30 ist benachbart des Gehäusedeckels 17 angeordnet, wobei der Bildschirm 30 von dem Gehäusedeckel 17 eingefasst ist und durch eine Ausnehmung in dem Gehäusedeckel 17 einsehbar ist. Die Auswertungseinheit 22 bildet dabei mit dem Bildschirm 30 ein gemeinsames Bauteil. In einem weiteren Ausführungsbeispiel ist die Auswertungseinheit 22 als separates Bauteil angeordnet.

Sobald das Maschenmessgerät 3 mit der im Maschenmessgerät 3 integrierten Kraftmesseinrichtung ein Erreichen eines eingestellten Zielwerts für die Messkraft feststellt, kann über den Bildschirm 30 der Wert der Realkraft abgelesen werden. Mit dem Wert der Realkraft kann eine Aussage über die Genauigkeit der Messung des Maschenmessgeräts 3 getroffen werden, indem Realkraft und Messwert verglichen werden. Die Ausnehmung im Gehäusedeckel 17 ist mit einem Schutzfenster 31 für den Bildschirm 30 abgedeckt.

In den Gehäusedeckel 17 ist ferner eine Buchse 32 integriert, welche eine Verbindung einer Schnittstelle der Auswertungseinheit 22 zur Kommunikation mit externen Geräten ermöglicht.

Die Prüfeinrichtung 14 umfasst ferner eine in den Gehäusedeckel 17 integrierte Stromversorgungsbuchse 33.

Auf dem Gehäusedeckel 17 sind Größenangaben zu jedem Messabstand 24 und zu der dem jeweiligen Messabstand 24 zugeordneten Messkraft lesbar angebracht, so dass Maschenöffnungen von Fischernetzen mit einer dem jeweiligen Messabstand entsprechenden Länge und Kraft, z.B. gemäß EU-Verordnung Nr. 517/2006, zu messen sind. Die Torsionsfedern 25 der unterschiedlichen Messabstände sind dabei jeweils mit einer geringfügig geringeren Rückstellkraft ausgestattet, als die jeweilige Messkraft, die für den jeweiligen Messabstand 24 vorgesehen ist. Dadurch wird sichergestellt, dass die Messzungen 6, 7 des Maschenmessgeräts 3 die Rückstellkraft der Torsionsfedern 25 überwinden und sich an den festen Anschlag 28 anlegen.

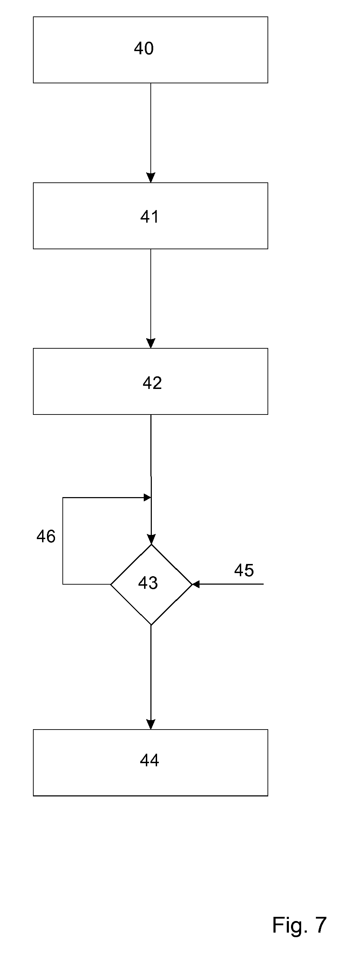

Fig. 7 zeigt ein Ablaufschema zur Prüfung der Messgenauigkeit der Messkraft von Maschenmessgeräten. Dabei wird in einem ersten Schritt der gewünschte Zielwert 40 für die Messkraft an dem Maschenmessgerät 3 eingestellt. In einem zweiten Schritt 41 werden die Messzungen des Maschenmessgerätes in die Messzungenaufnahme der Prüfeinrichtung 14 (Fig. 4 bis 6) eingeführt. Sofern die Genauigkeit des Maschenmessgeräts bei größeren Messkräften geprüft werden soll, sind dafür die entsprechend großen Messabstände 24 in der Prüfeinrichtung 14 zu wählen. Dabei werden die Messzungen 6, 7 vor dem Einführen in die Messzungenaufnahme 16 soweit auseinandergefahren, dass die Messzunge 6, 7 in den freien Raum vor dem Messzungenfühler 26 des für die Prüfung gewählten Messabstands 24 eingeführt wird.

In einem dritten Schritt 42 werden die Messzungen 6, 7 geöffnet. Sobald das Maschenmessgerät mit seiner integrierten Kraftmesseinrichtung das Erreichen des Zielwerts 40 der Messkraft annimmt und damit in einem vierten Schritt 43 die Öffnungsbewegung der Messzungen stoppt, wird in einem fünften Schritt 44 der Messwert der Realkraft, den die Prüfeinrichtung 14 ermittelt, mit der vom Maschenmessgerät 3 erfassten Messkraft verglichen. Die tatsächlich auf die Messzungen 6, 7 wirkende Kraft wird zeitgleich am Maschenmessgerät 3 und an der Prüfeinrichtung 14 gemessen, so dass mit einem Vergleich der jeweils gemessen Größen die Genauigkeit des Maschenmessgeräts 3 geprüft werden kann.

Eine Steuerung der Öffnungsbewegung der Messzungen im vierten Schritt 43 erfolgt dabei abhängig von der Messung 45 der Messkraft durch die Kraftmesseinrichtung in dem Maschenmessgerät 3.

Das Öffnen der Messzungen 6, 7 erfolgt zunächst mit einer höheren Öffnungsgeschwindigkeit und nach Erreichen des Messzungenfühlers 26 mit einer niedrigeren Öffnungsgeschwindigkeit. Der Prüfvorgang wird daher insgesamt rasch durchgeführt, da die Messzungen 6, 7 über einen großen Abschnitt ihres Weges bis zum Erreichen des Messabstands 24 mit einer hohen Geschwindigkeit bewegt werden. Dabei erfolgt eine Umschaltung 46 der Öffnungsgeschwindigkeit, sobald eine Kraft auf die Messzungen 6, 7 wirkt und damit das Erreichen des Messzungenfühlers 26 indiziert ist. Wird der Zielwert 40 der Messkraft erreicht, wird die Öffnungsbewegung der Messzungen 6, 7 gestoppt und zur Prüfung der Messgenauigkeit im fünften Schritt 44 übergegangen. Die Rückstellkräfte der Torsionsfedern 27 der Prüfeinrichtung 14, welche auf die Messzunge 7 des Maschenmessgeräts 3 wirken, simulieren dabei die Elastizität eines Fischernetzes, so dass realistische Messbedingungen für das Maschenmessgerät 3 geschaffen sind.

Mit der Kenntnis einer Abweichung des eingestellten Zielwerts 40 der Messkraft bzw. der von dem Maschenmessgerät 3 gemessenen Messkraft von der Messung der Prüfeinrichtung, welche der tatsächlich wirkenden Realkraft nahekommt bzw. entspricht, wird das Maschenmessgerät 3 in einem weiteren Schritt kalibriert, justiert oder geeicht.

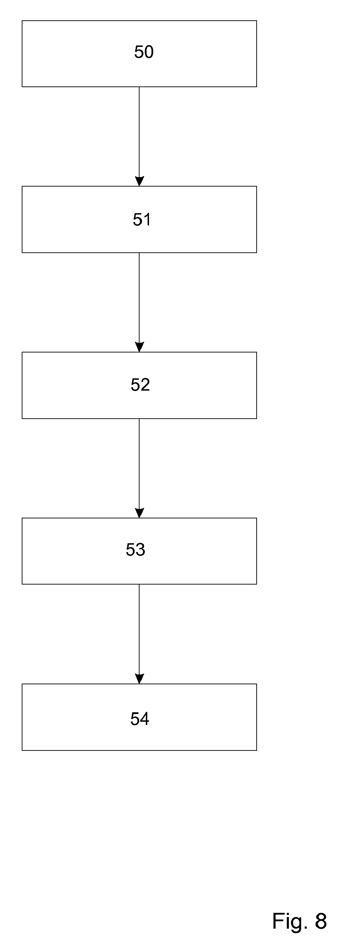

Fig. 8 zeigt ein Ablaufschema zur Prüfung der Genauigkeit der Messung der Maschenöffnung 2, d.h. der Längenmessung, wobei in einem ersten Schritt 50 an dem Maschenmessgerät 3 die gewünschte Messkraft eingestellt wird. Anschließend werden in einem zweiten Schritt 51 die Messzungen 6, 7 des Maschenmessgeräts 3 in die Messzungenaufnahme 16 der Prüfeinrichtung 14 eingeführt. In einem dritten Schritt 52 werden die Messzungen des Maschenmessgeräts 3 geöffnet. Sobald die Messzungen 6, 7 unter Überwindung der Rückstellkraft der Torsionsfedern 25 (Fig. 4 bis 6) an die Anschläge 28 gebracht werden, wird in einem vierten Schritt 53 die vom Maschenmessgerät 3 ermittelte Messzungenöffnung ausgelesen bzw. auf dem Bildschirm des Maschenmessgeräts 3 abgelesen. In einem fünften Schritt 54 wird schließlich der vom Maschenmessgerät 3 ermittelte Wert der Messzungenöffnung mit dem Messabstand 24 verglichen, an dessen Anschlag 28 die Öffnungsbewegung der Messzungen 6, 7 gestoppt ist.

Da der Messabstand 24 geometrisch im Messgehäuse 15 der Prüfeinrichtung 14 festliegt, kann aus einer Abweichung des vom Maschenmessgerät 3 gemessenen Wertes unmittelbar auf eine Messungenauigkeit geschlossen werden. Mit Kenntnis der Abweichung der vom Maschenmessgerät 3 erfassten Maschenöffnung von dem Messabstand 24 in der Prüfeinrichtung 14 kann die Messung der Maschenöffnung im Maschenmessgerät 3 kalibriert, justiert oder geeicht werden.

Für die Prüfung der Genauigkeit der Messung der Maschenöffnung wird ein Messabstand am Prüfgerät mit einer schwächeren Rückstellkraft ausgewählt, als am Maschenmessgerät 3 eingestellt ist. Dadurch wird gewährleistet, dass die Messzungen des Maschenmessgeräts 3 den Messzungenfühler 26 gegen die Federkraft des Messzungenfühlers 26 an den Anschlag 28 bringen, da die Prüfung der Genauigkeit der Maschenöffnungsmessung mit einem Messzungenfühler 26 vorgenommen wird, welcher eine betragsmäßig schwächere Torsionsfederkraft als die Messkraft aufweist.

Die Prüfung der Messkraft und die Prüfung der Genauigkeit der Längenmessung des Maschenmessgeräts können mit der erfindungsgemäßen Prüfeinrichtung in einem Vorgang durchgeführt werden. Die Rückstellkräfte der Torsionsfedern in der Prüfeinrichtung simulieren dabei z.B. die Elastizität eines Fischernetzes und sorgen dafür, dass die Geschwindigkeit der Öffnungsbewegung der Messzungen 6, 7 des Maschenmessgeräts 3 umgeschaltet wird. Bei der Anlage der Messzunge an dem Anschlag erfolgt eine rasche Zunahme der tatsächlich auf die Messzungen 6, 7 wirkenden Kraft, wobei die Elastizität des Gehäuses der Prüfeinrichtung und ein feinauflösender Schrittmotor des Maschenmessgeräts 3 die Messung der tatsächlich zwischen den Messzungen 6, 7 des Maschenmessgeräts 3 wirkenden Messkraft ermöglichen.

Sämtliche in der Figurenbeschreibung, in den Ansprüchen und der Beschreibungseinleitung genannten Merkmale sind sowohl einzeln als auch in beliebiger Weise miteinander kombiniert einsetzbar. Die Offenbarung der Erfindung ist daher nicht auf die beschriebenen bzw. beanspruchten Merkmalskombinationen beschränkt. Vielmehr sind alle Merkmalskombinationen als offenbart zu betrachten.

## Patentansprüche

1. Einrichtung zur Prüfung der Messgenauigkeit von Messgeräten zum Messen der Dimension eines Körpers und der dabei auf Messzungen des Messgeräts wirkenden Kraft, nachfolgend als Messkraft bezeichnet, **dadurch gekennzeichnet, dass**
die Prüfeinrichtung (14) eine Messzungenaufnahme (16) aufweist, in welche die Messzungen (6, 7) eines Messgeräts (3) einführbar sind und in der ein Kraftmessfühler (19) und wenigstens ein Messzungenfühler (26) voneinander in einem bestimmten Messabstand (24) in Längsrichtung der Messzungenaufnahme (16) beabstandet angeordnet sind, wobei der Kraftmessfühler (19) die in der Längsrichtung der Messzungenaufnahme (16) auf den Kraftmessfühler (19) wirkende Kraft, nachfolgend als Realkraft bezeichnet, erfasst.

2. Prüfeinrichtung nach Anspruch 1,
**dadurch gekennzeichnet, dass**
der Kraftmessfühler (19) einen Dehnungsmessstreifen (20) umfasst, welcher an eine Auswertungseinheit (22) angeschlossen ist, welche Mittel zur Bestimmung der in Längsrichtung der Messzungenaufnahme (16) wirkenden Realkraft aus den Messergebnissen des Dehnungsmessstreifens (20) aufweist.

3. Prüfeinrichtung nach Anspruch 1 oder 2,
**dadurch gekennzeichnet, dass**
mehrere Messzungenfühler (26) vorgesehen sind, welcher in unterschiedlichen Messabständen (24) bezogen auf den Kraftmessfühler (19) angeordnet sind.

4. Prüfeinrichtung nach einem der vorhergehenden Ansprüche,
**dadurch gekennzeichnet, dass**
jeder Messzungenfühler (26) in Längsrichtung gegen eine Rückstellkraft beweglich angeordnet ist.

5. Prüfeinrichtung nach Anspruch 4,
**gekennzeichnet durch**
Mittel zur Einstellung der Rückstellkraft, nämlich Federn (25) und/oder hydraulisch oder pneumatisch wirkende Mittel.

6. Prüfeinrichtung nach Anspruch 4 oder 5,
**dadurch gekennzeichnet, dass**
die Rückstellkraft jedes Messzungenfühlers (26) auf eine für den jeweiligen Messabstand an Messgeräten (3) vorgesehenen Messkraft abgestimmt ist.

7. Prüfeinrichtung nach einem der Ansprüche 4 bis 6,
**dadurch gekennzeichnet, dass**
jedem Messzungenfühler (26) ein fester Anschlag (28) zugeordnet ist, an dem der jeweilige Messzungenfühler (26) bei Überwindung der Rückstellkraft anlegbar ist.

8. Prüfeinrichtung nach einem der Ansprüche 4 bis 7,
**dadurch gekennzeichnet, dass**
jeder Messzungenfühler (26) durch ein freies Federende einer Torsionsfeder (25) gebildet ist, welches in die Messzungenaufnahme (16) reicht und gegen die Rückstellkraft der Torsionsfeder (25) in Längsrichtung der Messzungenaufnahme (16) bewegbar ist.

9. Prüfeinrichtung nach Anspruch 8,
**dadurch gekennzeichnet, dass**
die Torsionsfeder (25) auf einen ortsfest angeordneten Federdorn (27) aufgesteckt ist.

10. Prüfeinrichtung nach einem der Ansprüche 2 bis 9,
**dadurch gekennzeichnet, dass**
die Auswertungseinheit (22) an einem Bildschirm (30) zur Anzeige der aktuellen Messkraft angeschlossen ist.

11. Verfahren zur Prüfung der Messgenauigkeit von Messgeräten zum Messen der Dimension eines Körpers und der dabei auf Messzungen des Messgeräts wirkenden Kraft, nachfolgend als Messkraft bezeichnet, wobei an dem Messgerät (3) ein Zielwert (40) für die Messkraft eingestellt wird und bei Erreichen des eingestellten Zielwerts (40) der Messkraft die Dimension gemessen wird,
**dadurch gekennzeichnet, dass**
die Messzungen (6, 7) des Messgeräts in eine Messzungenaufnahme (16) einer Prüfeinrichtung (14) eingeführt und anschließend geöffnet werden, bis die Messzungen (6, 7) zwischen einem Kraftmessfühler (19) und einem Messzungenfühler (26), welche voneinander in einem bestimmten Messabstand (24) in Längsrichtung der Messzungenaufnahme (16) beabstandet angeordnet sind, bei Erreichen des am Messgerät eingestellten Zielwerts (40) der Messkraft gestoppt werden, anschließend die beim Stoppen des Öffnungsvorgangs der Messzungen (6, 7) auf den Kraftmessfühler (19) wirkende Kraft in Längsrichtung der Messzungenaufnahme (16), nachfolgend als Realkraft bezeichnet, ermittelt wird und schließlich die ermittelte Realkraft mit der am Messgerät gemessenen Messkraft verglichen wird und/oder zur Prüfung der Messgenauigkeit der Maschenöffnung der am Messgerät gemessene Wert der Dimension mit dem Messabstand (24) des Kraftmessfühlers (19) und des Messzungenfühlers (26) verglichen wird.

12. Verfahren nach Anspruch 11,
**dadurch gekennzeichnet, dass**
die Prüfung der Genauigkeit der Messung der Maschenöffnung mit einer auf den Messzungenfühler (26) wirkenden Rückstellkraft erfolgt, welche geringer ist als der am Messgerät (2) eingestellte Zielwert (40) der Messkraft.

13. Verfahren nach einem der Ansprüche 11 oder 12,
**dadurch gekennzeichnet, dass**
das Messgerät (3) mit der ermittelten Realkraft kalibriert, justiert oder geeicht wird.

14. Verfahren nach einem der Ansprüche 11 bis 13,
**dadurch gekennzeichnet, dass**
die Messzungen (6, 7) den Messzungenfühler (26) in Längsrichtung der Messzungenaufnahme (16) gegen eine auf die Messkraft abgestimmte Rückstellkraft bewegen, wobei die Messzungen (6, 7) während des Öffnungsvorgangs zunächst mit einer höheren Öffnungsgeschwindigkeit geöffnet werden und bei Erreichen des Messzungenfühlers (26) mit einer niedrigeren Öffnungsgeschwindigkeit geöffnet werden, wobei eine Umschaltung (46) auf die niedrigere Öffnungsgeschwindigkeit bei Feststellung einer Kraft zwischen den Messzungen (6, 7) erfolgt.

15. Verwendung einer Prüfeinrichtung nach einem Ansprüche 1 bis 10 oder eines Verfahrens nach einem der Ansprüche 11 bis 14 zur Prüfung der Messgenauigkeit von Maschenmessgeräten (3) zum Messen der Maschenöffnung netzförmiger Gewebe, insbesondere Fischernetzen.

## Claims

1. Device for testing the measurement accuracy of gauges for measuring the dimension of a body and the force acting on measuring tongues of the gauge, hereinafter referred to as measuring force,
**characterized in that**
the testing device (14) comprises a measuring tongue reception (16), in which the measuring tongues (6, 7) of a gauge (3) are insertable and in which a force measuring probe (19) and at least one measuring tongue probe (26) are spaced apart from each other within a determined measurement distance (24) in the longitudinal direction of the measuring tongue reception (16), wherein the force measuring probe (19) measures the force, hereinafter referred to as real-force, which is acting in the longitudinal direction of the measuring tongue reception (16) on the force measuring probe (19).

2. Testing device according to claim 1,
**characterized in that**
the force measuring probe (19) comprises a strain gauge (20), which is connected to an evaluation unit (22), which comprises means for determining the real-force acting in longitudinal direction of the measuring tongue reception (16) from the measurement results of the strain gauge (20).

3. Testing device according to claim 1 or 2,
**characterized in that**
a plurality of measuring tongue probes (26) are provided, which are arranged in different measuring distances (24) in relation to the force measuring probe (19).

4. Testing device according to one of the preceding claims,
**characterized in that**
each measuring tongue probe (26) is movably arranged in longitudinal direction against a restoring force.

5. Testing device according to claim 4,
**characterized by**
means for setting the restoring force, namely springs (25) and/or hydraulically or pneumatically acting means.

6. Testing device according to claim 4 or 5,
**characterized in that**
the restoring force of each measuring tongue probe (26) is adjusted to a measuring force designated for the respective measurement distance of gauges (3).

7. Testing device according to one of the claims 4 to 6,
**characterized in that**
each measuring tongue probe (26) is associated with a fixed stop (28), to which the respective measuring tongue probe (26) can be applied by overcoming the restoring force.

8. Testing device according to one of the claims 4 to 7,
**characterized in that**
each measuring tongue probe (26) is formed by a free spring end of a torsion spring (25), which extends into the measuring tongue reception (16) and is movable against the restoring force of the torsion spring (25) in the longitudinal direction of the measuring tongue reception (16).

9. Testing device according to claim 8,
**characterized in that**
the torsion spring (25) is mounted on a stationarily arranged spring mandrel (27).

10. Testing device according to one of the claims 2 to 9,
**characterized in that**
the evaluation unit (22) is connected to a display (30) for displaying the current measuring force.

11. Method for testing the measurement accuracy of gauges for measuring the dimension of a body and the force acting on the measuring tongues of the gauge, hereinafter referred to as measuring force, wherein a target value (40) is set for the measuring force on the gauge (3) and when reaching the set target value (40) of the measuring force, the dimension is measured,
**characterized in that**
the measuring tongues (6, 7) of the gauge are inserted in a measuring tongue reception (16) of a testing device (14) and are then being opened until the measuring tongues (6, 7) between a force measuring probe (19) and a measuring tongue probe (26), which are spaced apart from each other in the longitudinal direction of the measuring tongue reception (16) in a determined measurement distance (24), are stopped when reaching the target value (40) set at the gauge, then the force in longitudinal direction of the measuring tongue reception (16), hereinafter referred to as the real-force, is determined, which is acting on the force measuring probe (19), when the opening process of the measuring tongues (6, 7) is stopped, and finally the determined real-force is compared with the measured measuring force measured on the gauge and/or for testing the measurement accuracy of the mesh size the value of the dimension measured on the gauge is compared with the measurement distance (24) of the force measuring probe (19) and the measuring tongue probe (26).

12. Method according to claim 11,
**characterized in that**
the testing of the measurement accuracy of the mesh size happens with a restoring force acting on the measuring tongue probe (26), which is smaller than the target value (40) of the measuring force set at the gauge (3).

13. Method according to one of the claims 11 or 12,
**characterized in that**
the gauge (3) is grooved, adjusted or calibrated by the determined real-force.

14. Method according to one of the claims 11 to 13,
**characterized in that**
the measuring tongues (6, 7) move the measuring tongue probe (26) in longitudinal direction of the measuring tongue reception (16) against a restoring force adjusted to the measuring force, wherein during the opening process the measuring tongues (6, 7) are first opened at a higher opening speed and when reaching the measuring tongue probe (26) are opened at a lower opening speed, wherein a shift (46) to the lower opening speed happens when determining a force between the measuring tongues (6, 7).

15. Usage of a testing device according to one of the claims 1 to 10 or usage of a method according to one of the claims 11 to 14 for testing the measurement accuracy of meshes-gauges (3) for measuring the mesh size of netted fabrics, in particular fishing nets.

## Revendications

1. Dispositif pour contrôler la précision de mesure d'appareils de mesure pour mesurer la dimension d'un corps et la force s'exerçant ce faisant sur des languettes de mesure de l'appareil de mesure, ci-après dénommée force de mesure,
**caractérisé en ce que**
le dispositif de contrôle (14) présente un réceptacle de languette de mesure (16) dans lequel on peut introduire les languettes de mesure (6, 7) d'un appareil de mesure (3) et dans lequel un capteur de mesure de force (19) et au moins un capteur de languette de mesure (26) sont disposés de manière espacée l'un par rapport à l'autre d'une distance de mesure (24) définie en direction longitudinale du réceptacle de languette de mesure (16), le capteur de mesure de force (19) détectant la force s'exerçant sur le capteur de mesure de force (19) en direction longitudinale du réceptacle de languette de mesure (16), ci-après dénommée force réelle.

2. Dispositif de contrôle selon la revendication 1,
**caractérisé en ce que**
le capteur de mesure de force (19) comprend une jauge extensométrique (20) qui est raccordée à une unité d'évaluation (22), laquelle présente des moyens pour la détermination de la force réelle s'exerçant en direction longitudinale du réceptacle de languette de mesure (16) à partir des résultats de mesure de la jauge extensométrique (20).

3. Dispositif de contrôle selon la revendication 1 ou 2,
**caractérisé en ce que**
plusieurs capteurs de languette de mesure (26) sont prévus, lesquels sont disposés à des distances de mesure (24) différentes compte tenu du capteur de mesure de force (19).

4. Dispositif de contrôle selon l'une des revendications précédentes,
**caractérisé en ce que**
chaque capteur de languette de mesure (26) est disposé de manière mobile en direction longitudinale à l'encontre d'une force de rappel.

5. Dispositif de contrôle selon la revendication 4,
**caractérisé par**
des moyens pour le réglage de la force de rappel, à savoir des ressorts (25) et/ou des moyens à effet hydraulique ou pneumatique.

6. Dispositif de contrôle selon la revendication 4 ou 5,
**caractérisé en ce que**
la force de rappel de chaque capteur de languette de mesure (26) est adaptée à une force de mesure prévue pour la distance de mesure respective au niveau d'appareils de mesure (3).

7. Dispositif de contrôle selon l'une des revendications 4 à 6,
**caractérisé en ce que**
l'on associe à chaque capteur de languette de mesure (26) une butée fixe (28) contre laquelle il est possible de faire reposer le capteur de languette de mesure (26) respectif lorsque la force de rappel est surmontée.

8. Dispositif de contrôle selon l'une des revendications 4 à 7,
**caractérisé en ce que**
chaque capteur de languette de mesure (26) est formé par une extrémité libre de ressort d'un ressort de torsion (25), laquelle va jusque dans le réceptacle de languette de mesure (16) et peut se déplacer à l'encontre de la force de rappel du ressort de torsion (25) en direction longitudinale du réceptacle de languette de mesure (16).

9. Dispositif de contrôle selon la revendication 8,
**caractérisé en ce que**
le ressort de torsion (25) est apposé sur un mandrin de ressort (27) disposé de manière stationnaire.

10. Dispositif de contrôle selon l'une des revendications 2 à 9,
**caractérisé en ce que**
l'unité d'évaluation (22) est raccordée à un écran (30) pour l'affichage de la force de mesure actuelle.

11. Procédé pour contrôler la précision de mesure d'appareils de mesure pour mesurer la dimension d'un corps et de la force s'exerçant ce faisant sur des languettes de mesure de l'appareil de mesure, ci-après dénommée force de mesure, dans lequel on règle une valeur cible (40) pour la force de mesure au niveau de l'appareil de mesure (3) et la dimension étant mesurée lorsque la valeur cible (40) réglée pour la force de mesure est atteinte,
**caractérisé en ce que**
les languettes de mesure (6, 7) de l'appareil de mesure sont introduites dans un réceptacle de languette de mesure (16) d'un dispositif de contrôle (14) et sont ensuite ouvertes jusqu'à ce que les languettes de mesure (6, 7) soient arrêtées entre un capteur de mesure de force (19) et un capteur de languette de mesure (26), lesquels sont disposés de manière espacée l'un par rapport à l'autre d'une distance de mesure (24) définie en direction longitudinale du réceptacle de languette de mesure (16), lorsque la valeur cible (40) réglée pour la force de mesure au niveau de l'appareil de mesure est atteinte, la force s'exerçant en direction longitudinale du réceptacle de languette de mesure (16) sur le capteur de mesure de force (19) lors de l'arrêt du processus d'ouverture des languettes de mesure (6, 7), ci-après dénommée la force réelle, étant ensuite déterminée, et la force réelle déterminée étant finalement comparée avec la force de mesure mesurée au niveau de l'appareil de mesure et/ou la valeur de la dimension mesurée au niveau de l'appareil de mesure étant comparée avec la distance de mesure (24) du capteur de mesure de force (19) et du capteur de languette de mesure (26) pour contrôler la précision de mesure de l'ouverture de maille.

12. Procédé selon la revendication 11,
**caractérisé en ce que**
le contrôle de la précision de mesure de l'ouverture de maille s'effectue avec une force de rappel s'exerçant sur le capteur de languette de mesure (26), laquelle est inférieure à la valeur cible (40) réglée pour la force de mesure au niveau de l'appareil de mesure (2).

13. Procédé selon l'une des revendications 11 ou 12,
**caractérisé en ce que**
l'appareil de mesure (3) est calibré, réglé ou étalonné avec la force réelle déterminée.

14. Procédé selon l'une des revendications 11 à 13,
**caractérisé en ce que**
les languettes de mesure (6, 7) déplacent le capteur de languette de mesure (26) en direction longitudinale du réceptacle de languette de mesure (16) à l'encontre d'une force de rappel adaptée à la force de mesure, les languettes de mesure (6, 7) étant tout d'abord ouvertes à une vitesse d'ouverture plus élevée pendant le processus d'ouverture, et étant ouvertes avec une vitesse d'ouverture plus réduite en atteignant le capteur de languette de mesure (26), une commutation (46) pour passer à la vitesse d'ouverture plus réduite ayant lieu en cas de constatation d'une force entre les languettes de mesure (6, 7).

15. Utilisation d'un dispositif de contrôle selon l'une des revendications 1 à 10 ou d'un procédé selon l'une des revendications 11 à 14 pour contrôler la précision de mesure d'appareils de mesure de mailles (3) afin de mesurer l'ouverture de maille de tissus en forme de filets, en particulier de filets de pêche.
